# FASCICULE DE BREVET EUROPEEN

(11) **EP 2 135 777 B1**
(45) Date de publication et mention de la délivrance du brevet: **28.03.2012**
(21) Numéro de dépôt: 09161754.8
(22) Date de dépôt: 03.06.2009
(51) Int. Cl.: B60R 19/18, B60R 19/12

(54) **Système d'absorption d'une partie de l'énergie due à un choc contre un véhicule automobile**
Absorptionssystem eines Teils der Energie, die bei einem Aufprall auf ein Kraftfahrzeug freigesetzt wird
System for absorbing part of the energy caused by a crash against an automobile

(30) Priorité: 18.06.2008 FR 0854016
(43) Date de publication de la demande: 23.12.2009
(73) Titulaire: Faurecia Bloc Avant, 92000 Nanterre (FR)
(72) Inventeur: Gonin, Vincent, 25600 Sochaux (FR); Riviere, Caroline, 15320 Faverolles (FR); Borde, Patrick, 25400 Audincourt (FR); Laurent, Claude, 25420 Voujeaucourt (FR)
(74) Mandataire: Blot, Philippe Robert Emile

(56) Documents cités:
- EP-A- 1 293 389
- FR-A- 2 895 341

## Description

La présente invention concerne un système d'absorption d'une partie de l'énergie due à un choc contre un véhicule automobile, selon le préambule de la revendication 1.

L'invention concerne également un véhicule automobile comprenant un tel système d'absorption.

De tels systèmes d'absorption sont généralement disposés en avant de la structure avant de la caisse, ou bloc avant, de véhicule automobile et sont agencés pour protéger à la fois les piétons en cas de choc contre le véhicule et le véhicule automobile en cas de choc à faible vitesse contre un obstacle. Un système d'absorption du type précité est par exemple décrit dans le document FR-2 895 341. Ce document décrit un réseau de nervures sur la traverse supérieure et un autre réseau de nervures sur la poutre inférieure, une grille d'entrée d'air étant disposée entre ces réseaux.

Le document EP-1 293 389 décrit un système d'absorption comprenant une traverse supérieure et une poutre inférieure reliées par des moyens d'absorption d'énergie à leur partie extrême.

Cependant, un tel système est complexe à réaliser du fait de ses nombreux éléments d'absorption et ne permet pas d'absorber l'énergie due à un choc de façon optimale. En effet, lors d'un choc contre le véhicule, l'énergie est absorbée par les différents éléments du système d'absorption sans répartition optimale de l'énergie entre la poutre inférieure et la traverse supérieure. Ainsi, un choc bas sera absorbé par les éléments d'absorption inférieurs et la poutre inférieure et un choc haut sera absorbé par les éléments d'absorption supérieurs et la traverse supérieure, ce qui ne permet pas une absorption de l'énergie optimale. En outre, en cas de choc entre la poutre inférieure et la traverse supérieure, là où un espace est dépourvu d'éléments d'absorption entre les jambages, les risques d'intrusion vers le bloc avant de l'élément provoquant le choc sont très importants.

L'un des buts de l'invention est de pallier ces inconvénients en proposant un système d'absorption simple à réaliser et permettant une répartition optimale de l'absorption de l'énergie due à un choc, quel que soit l'endroit où se produit ce choc.

A cet effet, l'invention concerne un système d'absorption selon la revendication 1.

La présence des branches naissant de la poutre inférieure et aboutissant sur la traverse supérieure permet d'assurer une répartition optimale de l'énergie en cas de choc contre le véhicule automobile. L'énergie sera répartie entre la poutre inférieure et la traverse supérieure en se transmettant par les branches. En outre, les branches étant présentes sur toute la longueur du système d'absorption, il n'y a pas de zone dépourvue d'élément d'absorption, ce qui limite les risques d'intrusion de l'élément provoquant le choc.

Selon d'autres caractéristiques du système d'absorption :
- les branches sont venues de matière avec la poutre inférieure ;
- les branches présentent une forme bombée selon une direction sensiblement perpendiculaire à la poutre inférieure, à la traverse supérieure et aux branches ;
- les premières parties extrêmes des branches sont reliées les unes aux autres par au moins une branche s'étendant sensiblement perpendiculairement auxdites branches ;
- les deuxièmes parties extrêmes des branches sont reliées les unes aux autres par au moins une branche s'étendant sensiblement perpendiculairement auxdites branches ;
- les parties intermédiaires des branches, s'étendant entre les premières et deuxièmes parties extrêmes des branches, sont reliées les unes aux autres par au moins une branche s'étendant sensiblement perpendiculairement auxdites branches ;
- la poutre inférieure comprend, à chacune des ses parties extrêmes, au moins un dispositif d'absorption d'énergie s'étendant sensiblement perpendiculairement à la poutre inférieure et aux branches, lesdits dispositifs étant destinés à être disposés contre l'élément structurel inférieur du véhicule automobile ;
- la traverse supérieure comprend, à chacune des ses parties extrêmes, au moins un dispositif d'absorption d'énergie s'étendant sensiblement perpendiculairement à la traverse supérieure et aux branches, lesdits dispositifs étant destinés à être disposés contre l'élément structurel supérieur du véhicule automobile ; et
- le système d'absorption comprend au moins un écran aéraulique, agencé pour guider l'air sous le véhicule automobile.

L'invention concerne également un véhicule automobile du type comprenant une structure avant de caisse et un système d'absorption d'une partie de l'énergie due à un choc contre un véhicule automobile disposé en avant de la structure avant, dans lequel le système d'absorption est tel que décrit ci-dessus.

Selon une autre caractéristique du véhicule automobile, la structure avant de caisse comprend des longerons, chacun formant élément structurel supérieur, et des prolonges de berceau, chacune formant élément structurel inférieur, la traverse supérieure et la poutre inférieure du système d'absorption étant respectivement fixées aux dits longerons et aux dites prolonges de berceau.

D'autres aspects et avantages de l'invention apparaîtront à la lecture de la description qui suit, donnée à titre d'exemple et faite en références aux dessins annexés, dans lesquels :
- la Fig. 1 est une représentation schématique en perspective d'un système d'absorption selon l'invention, disposé devant des éléments de structure de caisse d'un véhicule automobile,
- la Fig. 2 est une représentation schématique en perspective du système d'absorption de la Fig. 1, recouvert par une peau de pare-choc.

Dans la description, les termes de direction sont définis par rapport à un véhicule automobile monté.

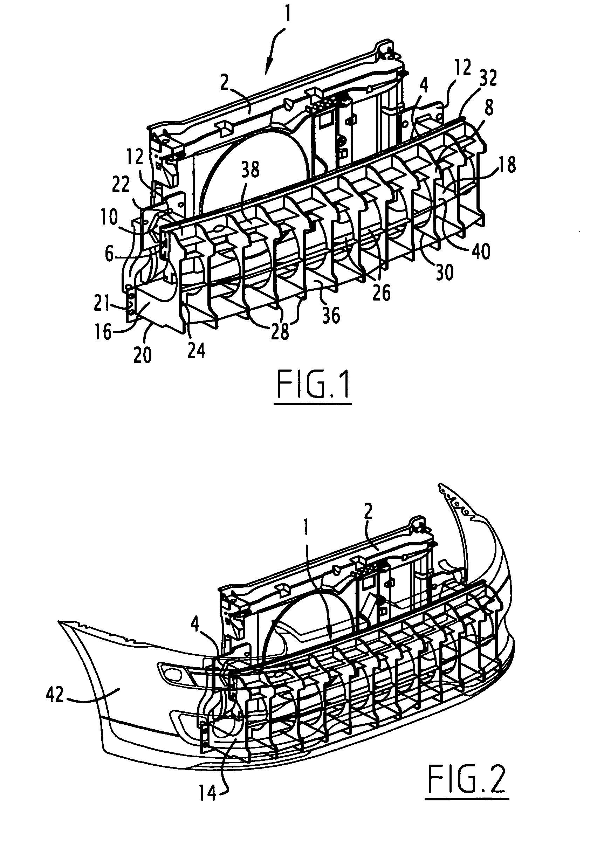

En référence à la Fig. 1, on décrit un système d'absorption 1 d'une partie de l'énergie due à un choc frontal contre un véhicule automobile destiné à être placé en avant d'une structure de caisse avant 2 (partiellement représentée) afin de protéger à la fois les piétons en cas de choc contre le véhicule et le véhicule automobile en cas de choc à faible vitesse contre un obstacle. Mais on comprendra également qu'un tel système d'absorption pourrait également être disposé en arrière d'une structure de caisse arrière de véhicule automobile afin d'absorber l'énergie due à un choc arrière.

Le système d'absorption 1 comprend une traverse supérieure 4 destinée à être fixée à des éléments structurels supérieurs de la structure de caisse avant 2. Ces éléments sont par exemple les longerons (non représentés) du véhicule automobile. La traverse 4 s'étend selon la largeur du véhicule automobile entre ses deux parties extrêmes 6 et 8. Chaque partie extrême comprend un élément d'absorption 10 de l'énergie due à un choc, ou « crash box », s'étendant selon la longueur du véhicule automobile et en arrière de la traverse 4. Ces éléments d'absorption 10 comprennent des moyens de fixation 12 aux longerons. Ainsi, en cas de choc frontal contre le véhicule automobile, la traverse supérieure répartie l'énergie due au choc entre ses parties extrêmes 6 et 8 et les éléments 10 se déforment selon la longueur du véhicule en absorbant de l'énergie. La traverse 4 est par exemple réalisée en matériau métallique. La traverse 4 permet notamment d'absorber l'énergie due à des chocs en partie haute de la caisse de véhicule automobile.

Le système d'absorption comprend en outre une poutre inférieure 14 destinée à être fixée à des éléments structurels supérieurs de la structure de caisse avant 2. Ces éléments sont par exemple les prolonges de berceau (non représentées) du véhicule automobile. La poutre 14 s'étend en dessous de la traverse 4 et parallèlement à celle-ci, c'est-à-dire selon la largeur du véhicule automobile entre ses parties extrêmes 16 et 18. Chaque partie extrême comprend un élément d'absorption 20 de l'énergie due à un choc, ou « crash box », s'étendant selon la longueur du véhicule automobile et en arrière de la poutre 14. Ces éléments d'absorption 20 comprennent des moyens de fixation 21 aux prolonges de berceau. Ainsi, en cas de choc frontal contre le véhicule automobile, la poutre inférieure répartie l'énergie due au choc entre ses parties extrêmes 16 et 18 et les éléments 20 se déforment selon la longueur du véhicule en absorbant de l'énergie. La poutre 14 est par exemple réalisée en matériau plastique ou avec une âme métallique enrobée d'un matériau plastique. La poutre 14 permet notamment d'absorber l'énergie due à des chocs en partie basse de la caisse de véhicule automobile.

La traverse 4 et la poutre 14 comprennent chacune une face avant, respectivement 22 et 24, s'étendant selon la hauteur du véhicule automobile d'une partie extrême à l'autre de la traverse 4 et de la poutre 14.

Des moyens d'absorption d'énergie 26 relient la poutre 14 à la traverse 4. Ces moyens d'absorption comprennent une pluralité de branches 28 s'étendant de la face avant 24 de la poutre 14 à la face avant 22 de la traverse 4. Les branches 28 s'étendent donc sensiblement verticalement et vers l'avant depuis les faces avant 24 et 22. Selon un mode de réalisation, les branches 28 sont réalisées d'une seule pièce avec la poutre inférieure 14.

Chaque branche 28 comprend une première partie extrême 30, solidaire de la poutre inférieure 14 et s'étendant sur toute la hauteur de la face avant 24 de la poutre inférieure 14, et une deuxième partie extrême 32 reposant contre la traverse supérieure 4 et s'étendant sur toute la hauteur de la face avant 22 de la traverse inférieure 4. Ainsi, les branches s'étendent sur toute la hauteur du système 1, ce qui permet de répartir de façon optimale l'absorption d'énergie en cas de choc contre le véhicule en assurant une transmission verticale de l'énergie entre la poutre inférieure 14 et la traverse supérieure 4.

Les branches sont par exemple des nervures présentant une section sensiblement plane. Selon d'autres modes de réalisation, les branches présentent une section en forme de U, de V ou de Y. Dans le cas de branches présentant une section en forme de U, les branches présentent une face avant sensiblement plane, formant la base du U, et des ailes sensiblement perpendiculaires à la face avant et s'étendant vers l'arrière de celle-ci.

Les branches 28 sont réparties le long de toute la face avant de la poutre 14 et de la traverse 4 afin de ne pas laisser d'espace trop important sans élément d'absorption d'énergie, ce qui permet de protéger le bloc avant contre les intrusions.

La partie intermédiaire 34 de chaque branche 28 s'étendant entre la première et la deuxième parties extrêmes 30 et 32, c'est-à-dire entre la poutre inférieure 14 et la traverse supérieure 4, présente par exemple une forme bombée vers l'avant entre la face avant de la poutre 14 et la face avant de la traverse 4, comme représenté sur la Fig. 1. Une telle forme assure à la fois une déformation « en flexion » et « en compression » des moyens d'absorption 26. C'est-à-dire qu'en cas de choc, les moyens d'absorption 26 se déformeront à la fois en se pliant et en s'écrasant, ce qui améliore l'absorption d'énergie. Selon le mode de réalisation représenté, seule l'arrête arrière de chaque branche présente une forme bombée, tandis que l'arrête avant est sensiblement rectiligne.

Afin d'assurer le maintien des branches 28 et d'améliorer encore la répartition d'énergie, les premières parties extrêmes 30 des branches 28 sont reliées les unes aux autres par au moins une branche 36 horizontale s'étendant perpendiculairement aux branches 28. De même, les deuxièmes parties extrêmes 32 sont reliées les unes aux autres par au moins une branche 38 horizontale s'étendant perpendiculairement aux branches 28. Les parties intermédiaires 34 des branches 28 peuvent également être reliées les unes aux autres par une branche horizontale 40. Le nombre de branches horizontales est choisi en fonction de la rigidité que l'on souhaite conférer au système d'absorption et peut être variable.

Selon un mode de réalisation, des éléments d'absorption, ou crash box, sont disposés dans les espaces séparant les branches 28 afin d'améliorer l'absorption d'énergie en cas de choc contre le véhicule automobile.

Le système décrit ci-dessus est installé entre le bloc avant du véhicule automobile et la peau de pare-choc 42 du véhicule automobile comme représenté sur la Fig. 2. Un tel système permet d'améliorer l'absorption d'énergie en assurant une meilleure répartition de celle-ci entre la poutre inférieure 14 et la traverse supérieure 4.

Selon un mode de réalisation, la peau de pare-choc 42 comprend une ouverture laissant apparaître au moins une partie des branches 28 verticales, qui remplissent alors également une fonction esthétique en formant une grille d'aspect visible de l'extérieur du véhicule ou en servant de support à au moins un élément de décor.

En outre, comme des moyens d'absorption s'étendent sur toute la hauteur du système, c'est-à-dire sensiblement sur toute la hauteur de la peau de pare-choc 42, comme représenté sur la Fig. 2, l'absorption d'énergie en cas de choc entre deux véhicules ayant des assiettes différentes est assurée. C'est-à-dire qu'en cas de hauteur différente de peau de pare-choc entre deux véhicules, la hauteur importante du système d'absorption assure que le choc se fera tout de même en regard de moyens d'absorption d'énergie.

Pour des chocs à faible vitesse, la forme bombée des branches 28 assurent que celles-ci se déformeront de manière réversible en se pliant et non en s'écrasant, ce qui se produirait uniquement en cas de choc à plus grande vitesse. Ainsi, le remplacement du système d'absorption après un choc à faible vitesse n'est pas nécessaire, car les branches retrouvent leur forme initiale après un tel choc.

Selon un mode de réalisation, le système d'absorption comprend au moins un écran aéraulique permettant de guider l'air sous la face avant du véhicule automobile. De la sorte, le système d'absorption réalise également une fonction de guidage d'air améliorant les performances du véhicule automobile.

Le nombre de pièces à assembler est faible, ce qui facilite la production et le montage du système d'absorption.

Le système d'absorption peut porter des éléments habituellement portés par la peau de pare-choc, comme la grille de radiateur, les feux anti-brouillard et autre, ce qui permet de simplifier la peau de pare-choc et de conférer une esthétique particulière au véhicule.

## Revendications

1. Système d'absorption (1) d'une partie de l'énergie due à un choc contre un véhicule automobile, comprenant :
- une traverse supérieure (4), dont les parties extrêmes (10, 12) sont destinées à être disposées contre au moins un élément structurel supérieur du véhicule automobile,
- une poutre inférieure (14), dont les parties extrêmes (16, 18) sont destinées à être disposées contre au moins un élément structurel inférieur du véhicule automobile, ladite poutre (14) et ladite traverse (4) s'étendant sensiblement parallèlement l'une par rapport à l'autre, ladite poutre inférieure (14) étant reliée à ladite traverse supérieure (4) par des moyens d'absorption d'énergie (26), lesdits moyens d'absorption d'énergie (26) comprenant une pluralité de branches (28) s'étendant sensiblement perpendiculairement à la traverse supérieure (4) et à la poutre inférieure (14), lesdites branches (28) étant réparties sur toute la longueur de la poutre inférieure (14) et de la traverse supérieure (4), lesdites branches (28) comprenant chacune une première partie extrême (30) solidaire de la poutre inférieure (14) et une deuxième partie extrême (32) reposant contre la traverse supérieure (4), **caractérisé en ce que** chacune desdites premières parties extrêmes s'étendent sur toute la hauteur de la face avant (24) de ladite poutre inférieure et **en ce que** chacune desdites deuxièmes parties extrêmes s'étendent sur toute la hauteur de la face avant (22) de ladite traverse supérieure.

2. Système d'absorption selon la revendication 1, **caractérisé en ce que** les branches (28) sont venues de matière avec la poutre inférieure (14).

3. Système d'absorption selon la revendication 1 ou 2, **caractérisé en ce que** les branches (28) présentent une forme bombée selon une direction sensiblement perpendiculaire à la poutre inférieure (14), à la traverse supérieure (4) et aux branches (28).

4. Système d'absorption selon l'une quelconque des revendications 1 à 3, **caractérisé en ce que** les premières parties extrêmes (30) des branches (28) sont reliées les unes aux autres par au moins une branche (36) s'étendant sensiblement perpendiculairement auxdites branches (28).

5. Système d'absorption selon l'une quelconque des revendications 1 à 4, **caractérisé en ce que** les deuxièmes parties extrêmes (32) des branches (28) sont reliées les unes aux autres par au moins une branche (38) s'étendant sensiblement perpendiculairement auxdites branches (28).

6. Système d'absorption selon l'une quelconque des revendications 1 à 5, **caractérisé en ce que** les parties intermédiaires (34) des branches (28), s'étendant entre les premières (30) et deuxièmes (32) parties extrêmes des branches (28), sont reliées les unes aux autres par au moins une branche (40) s'étendant sensiblement perpendiculairement auxdites branches (28).

7. Système d'absorption selon l'une quelconque des revendications 1 à 6, **caractérisé en ce que** la poutre inférieure (14) comprend, à chacune des ses parties extrêmes (16, 18), au moins un dispositif d'absorption d'énergie (20) s'étendant sensiblement perpendiculairement à la poutre inférieure (14) et aux branches (28), lesdits dispositifs (20) étant destinés à être disposés contre l'élément structurel inférieur du véhicule automobile.

8. Système d'absorption selon l'une quelconque des revendications 1 à 7, **caractérisé en ce que** la traverse supérieure (4) comprend, à chacune des ses parties extrêmes (6, 8), au moins un dispositif d'absorption d'énergie (10) s'étendant sensiblement perpendiculairement à la traverse supérieure (4) et aux branches (28), lesdits dispositifs (10) étant destinés à être disposés contre l'élément structurel supérieur du véhicule automobile.

9. Système d'absorption selon l'une quelconque des revendications 1 à 8, **caractérisé en ce qu'**il comprend au moins un écran aéraulique, agencé pour guider l'air sous le véhicule automobile.

10. Véhicule automobile, comprenant une structure avant de caisse et un système d'absorption (1) d'une partie de l'énergie due à un choc contre un véhicule automobile disposé en avant de la structure avant, **caractérisé en ce que** ledit système d'absorption (1) est selon l'une quelconque des revendications 1 à 9.

11. Véhicule automobile selon la revendication 10, **caractérisé en ce que** la structure avant de caisse comprend des longerons, chacun formant élément structurel supérieur, et des prolonges de berceau, chacune formant élément structurel inférieur, la traverse supérieure (4) et la poutre inférieure (14) du système d'absorption (1) étant respectivement fixées aux dits longerons et aux dites prolonges de berceau.

## Claims

1. A system for absorbing (1) part of the energy caused by a crash against a motor vehicle comprising:
- an upper crossbar (4), the extreme parts (10, 12) of which are intended to be placed against at least one upper structural element of the motor vehicle,
- a lower beam (14), the extreme parts (16, 18) of which are intended to be placed against at least one lower structural element of the motor vehicle, said beam (14) and said crossbar (4) extending substantially parallel relative to each other, said lower beam (14) being connected to said upper crossbar (4) by energy absorption means (26),
**characterised in that** each of said first extreme parts extend over the whole height of the front face (24) of said lower beam and **in that** each of said second extreme parts extend over the whole height of the front face (22) of said upper crossbar, said energy absorption means (26) comprising a plurality of branches (28) extending substantially perpendicularly to the upper crossbar (4) and to the lower beam (14), said branches (28) being distributed over the whole length of the lower beam (14) and of the upper crossbar (4), said branches (28) each comprising a first extreme part (30) integral with the lower beam (14) and a second extreme part (32) resting against the upper crossbar (4).

2. The absorption system according to Claim 1, **characterised in that** the branches (28) are made integrally with the lower beam (14).

3. The absorption system according to Claim 1 or 2, **characterised in that** the branches (28) are domed in shape in a direction substantially perpendicular to the lower beam (14), the upper crossbar (4) and the branches (28).

4. The absorption system according to any of Claims 1 to 3, **characterised in that** the first extreme parts (30) of the branches (28) are connected to one another by at least one branch (36) extending substantially perpendicularly to said branches (28).

5. The absorption system according to any of Claims 1 to 4, **characterised in that** the second extreme parts (32) of the branches (28) are connected to one another by at least one branch (38) extending substantially perpendicularly to said branches (28).

6. The absorption system according to any of Claims 1 to 5, **characterised in that** the intermediate parts (34) of the branches (28) extending between the first (30) and the second (32) extreme parts of the branches (28) are connected to one another by at least one branch (40) extending substantially perpendicularly to said branches (28).

7. The absorption system according to any of Claims 1 to 6, **characterised in that** the lower beam (14) comprises on each of its extreme parts (16, 18) at least one energy absorption device (20) extending substantially perpendicularly to the lower beam (14) and to the branches (28), said devices (20) being intended to be placed against the lower structural element of the motor vehicle.

8. The absorption system according to any of Claims 1 to 7, **characterised in that** the upper crossbar (4) comprises on each of its extreme parts (6, 8) at least one energy absorption device (10) extending substantially perpendicularly to the upper crossbar (4) and to the branches (28), said devices (10) being intended to be placed against the upper structural element of the motor vehicle.

9. The absorption system according to any of Claims 1 to 8, **characterised in that** it comprises at least one aeraulic screen arranged to guide air beneath the motor vehicle.

10. A motor vehicle comprising a front shell structure and a system for absorbing (1) part of the energy caused by a crash against a motor vehicle placed in front of the front structure, **characterised in that** said absorption system (1) is in accordance with any of Claims 1 to 9.

11. The motor vehicle according to Claim 10, **characterised in that** the front shell structure comprises girders, each forming an upper structural element, and carrier prolongations, each forming a lower structural element, the upper crossbar (4) and the lower beam (14) of the absorption system (1) being respectively fixed to said girders and to said carrier prolongations.

## Patentansprüche

1. Absorptionssystem (1) für einen Teil der Energie, die bei einem Aufprall gegen ein Kraftfahrzeug freigesetzt wird, umfassend:
- eine obere Traverse (4), deren äußere Teile (10,12) dazu vorgesehen sind, an zumindest einem oberen Strukturteil des Kraftfahrzeugs angebracht zu werden,
- einen unteren Träger (14), dessen äußere Teile (16,18) dazu vorgesehen sind, an zumindest einem unteren Strukturteil des Kraftfahrzeugs befestigt zu werden, welcher Träger (14) und welche Traverse (4) sich im wesentlichen parallel zueinander erstrecken, wobei der untere Träger (14) mit der oberen Traverse (4) durch Mittel zur Energieabsorption (26) verbunden ist,
welche Mittel zur Energieabsorption (26) eine Anzahl von Rippen (28) umfassen, die sich im wesentlichen senkrecht zur oberen Traverse (4) und zum unteren Träger (14) erstrecken, welche Rippen (28) entlang der gesamten Länge des unteren Trägers (14) und der oberen Traverse (4) verteilt sind und welche Rippen (28) jeweils einen ersten äußeren Teil (30) umfassen, der mit dem unteren Träger (14) verbunden ist, und einen zweiten äußeren Teil (32), der an der oberen Traverse (4) abgestützt ist,
**dadurch gekennzeichnet, dass** jeder der ersten äußeren Teile sich über die gesamte Höhe der Vorderseite (24) des unteren Trägers (14) erstreckt und dass jeder der zweiten äußeren Teile sich über die gesamte Höhe der Vorderseite (22) der oberen Traverse (4) erstreckt.

2. Absorptionssystem gemäß Anspruch 1, **dadurch gekennzeichnet, dass** die Rippen (28) einteilig mit dem unteren Träger (14) ausgebildet sind.

3. Absorptionssystem gemäß Anspruch 1 oder 2, **dadurch gekennzeichnet, dass** die Rippen (28) eine gewölbte Form aufweisen und sich in einer im wesentlichen senkrechten Richtung zum unteren Träger (14), zur oberen Traverse (4) und zu den Rippen (28) erstrecken.

4. Absorptionssystem gemäß einem der Ansprüche 1 bis 3, **dadurch gekennzeichnet, dass** die ersten äußeren Teile (30) der Rippen (28) miteinander durch zumindest einen Steg (36) verbunden sind, der sich im wesentlichen senkrecht zu den Rippen (28) erstreckt.

5. Absorptionssystem gemäß einem der Ansprüche 1 bis 4, **dadurch gekennzeichnet, dass** die zweiten äußeren Teile (32) der Rippen (28) miteinander durch zumindest einen Steg (38) verbunden sind, der sich im wesentlichen senkrecht zu den Rippen (28) erstreckt.

6. Absorptionssystem gemäß einem der Ansprüche 1 bis 5, **dadurch gekennzeichnet, dass** die mittleren Teile (34) der Rippen (28), die sich zwischen den ersten äußeren Teilen (30) und den zweiten äußeren Teilen (32) der Rippen (28) erstrecken, miteinander durch zumindest einen Steg (40) verbunden sind, der sich im wesentlichen senkrecht zu den Rippen (28) erstreckt.

7. Absorptionssystem gemäß einem der Ansprüche 1 bis 6, **dadurch gekennzeichnet, dass** der untere Träger (14) an einem seiner äußeren Teile (16,18) zumindest eine Vorrichtung zur Energieabsorption (20) umfasst, die sich im wesentlichen senkrecht zu dem unteren Träger (14) und zu den Rippen (28) erstreckt, welche Vorrichtungen (20) dazu vorgesehen sind, an einem unteren Strukturteil des Kraftfahrzeugs angebracht zu werden.

8. Absorptionssystem gemäß einem der Ansprüche 1 bis 7, **dadurch gekennzeichnet, dass** die obere Traverse (4) an einem ihrer äußeren Teile (6,8) zumindest eine Vorrichtung zur Energieabsorption (10) umfasst, die sich im wesentlichen senkrecht zur oberen Traverse (4) und zu den Rippen (28) erstreckt, welche Vorrichtungen (10) dazu vorgesehen sind, an einem oberen Strukturteil des Kraftfahrzeugs angebracht zu werden.

9. Absorptionssystem gemäß einem der Ansprüche 1 bis 8, **dadurch gekennzeichnet, dass** es zumindest ein Windschott umfasst, das dazu vorgesehen ist, Luft in das Kraftfahrzeug zu leiten.

10. Kraftfahrzeug, umfassend eine vordere Karosseriestruktur und ein Absorptionssystem (1) zur Aufnahme eines Teils der Energie, die bei einem Aufprall gegen ein Kraftfahrzeug freigesetzt wird, welches vor der vorderen Karosseriestruktur angebracht ist, **dadurch gekennzeichnet, dass** das Absorptionssystem (1) gemäß einem der vorhergehenden Ansprüche 1 bis 9 aufgebaut ist.

11. Kraftfahrzeug gemäß Anspruch 10, **dadurch gekennzeichnet, dass** die vordere Karosseriestruktur Längsträger umfasst, von denen jeder ein oberes Strukturteil bildet, sowie Verlängerungsbögen, von denen jeder ein unteres Strukturteil bildet, wobei die obere Traverse (4) und der untere Träger (14) des Absorptionssystems (1) jeweils an den Längsträgern und den Verlängerungsbögen befestigt sind.
